# EUROPÄISCHE PATENTSCHRIFT

(11) **EP 4 270 917 B1**
(45) Veröffentlichungstag und Bekanntmachung des Hinweises auf die Patenterteilung: **24.04.2024**
(21) Anmeldenummer: 22170675.7
(22) Anmeldetag: 29.04.2022
(51) Int. Cl.: H04N 23/67, H04N 23/70, H04N 23/81, G06K 7/10

(54) **KAMERA UND VERFAHREN ZUR ERFASSUNG EINES OBJEKTS**
CAMERA AND METHOD FOR DETECTING AN OBJECT
CAMÉRA ET PROCÉDÉ DE CAPTURE D'UN OBJET

(43) Veröffentlichungstag der Anmeldung: 01.11.2023
(73) Patentinhaber: SICK AG, 79183 Waldkirch (DE)
(72) Erfinder: Bleicher, Katharina, 79312 Emmendingen (DE); Müller, Romain, 79252 Stegen (DE); Nopper, Richard, 79261 Gutach (DE); Mahler, Jan, 79292 Pfaffenweiler (DE)

(56) Entgegenhaltungen:
- WO-A1-2010/131210
- US-A1- 2006 196 943
- US-B1- 9 007 490

## Beschreibung

Die Erfindung betrifft eine Kamera und ein Verfahren zur Erfassung eines Objekts in einem Erfassungsbereich nach dem Oberbegriff von Anspruch 1 beziehungsweise 15.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

Die Kamera ist vielfach Teil eines komplexen Sensorsystems. Beispielsweise ist es bei Lesetunneln an Förderbändern üblich, eine Vielzahl von kamerabasierten Codelesern einerseits nebeneinander zur Abdeckung einer größeren Förderbandbreite und andererseits aus unterschiedlichen Perspektiven zu montieren, um Objekte von mehreren Seiten aufzunehmen. Weiterhin wird oftmals die Geometrie der geförderten Objekte vorab mit einem gesonderten Sensor, beispielsweise einem Laserscanner vermessen, um daraus Fokusinformationen, Auslösezeitpunkte, Bildbereiche mit Objekten und dergleichen zu bestimmen.

Es ist bekannt, für die Erfassung hochaufgelöster Bilder eine Zeilenkamera einzusetzen, deren Bildzeilen im Laufe der Relativbewegung zu einem Gesamtbild zusammengesetzt werden. Solche Zeilenkameras nehmen typischerweise ein monochromes Bild auf, das auch als Grauwertbild oder Schwarz-Weiß-Bild bezeichnet wird. Die EP 3 822 844 B1 offenbart einen kamerabasierten Codeleser mit mehreren Zeilenanordnungen, die je mindestens eine weiße und farbige Zeile bilden. Mit der weißen Zeile wird ein Grauwertbild und mit der farbigen Zeile zugleich ein farbiges Bild aufgenommen. Eine Besonderheit der EP 3 822 844 B1 ist, dass die farbige Zeile nur Pixel für zwei Grundfarben aufweist, beispielsweise für rot und blau, und die dritte Grundfarbe, in dem Beispiel grün, mit Hilfe der weißen Zeile rekonstruiert wird.

Das spezifische Rauschmuster von Bildsensoren, das durch unterschiedliches Verhalten der einzelnen Pixel entsteht, wird als Fixed-Pattern-Noise bezeichnet. Es wird unterteilt in eine Komponente bei Lichteinfall (PRNU, Photo Response Non-Uniformity) und einen Dunkelanteil (DSNU, Dark Signal Non-Uniformity). Das unterschiedliche Pixelverhalten tritt bei CCD- und CMOS-Bildsensoren auf und ist insbesondere für CMOS-Bildsensoren eine erhebliche Störquelle.

Die unterschiedlichen Empfindlichkeiten der Pixel können vermessen und dann kompensiert werden. Für die Komponente bei Lichteinfall (PRNU) wird dazu der Bildsensor mit homogenem Licht beleuchtet und das entstehende Bild ausgewertet. Zur Kompensation kann eine Verstärkung mit dem jeweiligen normierten reziproken Wert der anfänglichen Vermessung erfolgen. Im Vorfeld ist noch eine Offset-Kompensation möglich.

Die herkömmliche PRNU-Kompensation berücksichtigt jedoch nur einen Lichteinfall bei einer senkrechten Orientierung. Bei seitlichem Lichteinfall kann sich die Empfindlichkeit der Pixel ändern, wobei unter anderem geometrische Effekte des Bildsensors und der Quantenwirkungsgrad des Halbleiters bei schräg eintreffendem Licht eine Rolle spielen. Dieser Effekt wird aber bisher nicht ausreichend beachtet, vor allem dann nicht, wenn sich der Einfallswinkel im Betrieb dynamisch ändert. Das wiederum ist insbesondere bei bestimmten Fokusverstellungen der Fall, die auf geometrisch veränderten Empfangslichtwegen beispielsweise durch einen schwenkbaren Umlenkspiegel basieren. Derartige Fokusverstellungen sind beispielsweise aus der EP 1 698 995 B1 oder der EP 1 698 996 B1 bekannt, die sich wiederum in keiner Weise für Auswirkungen auf die Helligkeitsverteilungen oder auch nur eine PRNU im Allgemeinen interessieren.

Die US 3 949 162 A erläutert eine Fixed-Pattern-Noise-Kompensation, ohne dabei schrägen Lichteinfall zu diskutieren. In der US 8 622 302 B2 wird im Betrieb geprüft, ob eine ursprüngliche Fixed-Pattern-Noise-Kompensation noch angemessen ist, und gegebenenfalls wird ein neues Dunkelbild aufgenommen, um die Kompensation anzupassen.

Die US 9 007 490 B1 erzeugt eine Helligkeitskompensationskarte und wendet diese als Vorverarbeitungsschritt eines Superresolution-Verfahrens auf erfasste Bilder an. Dabei werden PRNU, Vignettierung und Intensitätsunterschiede bei senkrechtem und schrägem Lichteinfall diskutiert. Die WO 2010/131210 A1 kompensiert gleichzeitig in ihren Bilddaten Inhomogenitäten und eine chromatische Aberration. Genannte Ursachen für Inhomogenitäten sind ebenfalls Fixed-Pattern-Noise, Vignettierung und die stärkeren Signale bei senkrechtem gegenüber schrägem Lichteinfall. Es geht hier aber nicht darum, dass das Licht insgesamt unter einem schrägen Winkel einfällt, denn eine Kamera ist üblicherweise so konstruiert, dass das nicht geschieht. Erst recht ist der Fall nicht berücksichtigt, dass der Winkel des schrägen Lichteinfalls sich im Betrieb dynamisch verändert, wie im Fall einer Fokussierung durch Verschwenken eines Umlenkspiegels beispielsweise gemäß den schon genannten Dokumenten EP 1 698 995 B1 oder EP 1 698 996 B1.

Es ist daher Aufgabe der Erfindung, die Bilderfassung mit einer Kamera weiter zu verbessern.

Diese Aufgabe wird durch eine Kamera und ein Verfahren zur Erfassung eines Objekts in einem Erfassungsbereich nach Anspruch 1 beziehungsweise 15 gelöst. Auf einen Bildsensor mit einer Vielzahl von Lichtempfangselementen oder Pixeln trifft Empfangslicht aus dem Erfassungsbereich, und so nimmt der Bildsensor Bilder beziehungsweise Bilddaten des Erfassungsbereichs und eines dort befindlichen Objekts auf. Um scharfe Bilder zu erzeugen, ist eine Empfangsoptik mit einer Fokusverstelleinheit vorgesehen, also ein Empfangsobjektiv, das je nach Qualitätsanforderungen eine oder mehrere Linsen und sonstige optische Elemente aufweist. Es wird eine Fokusverstelleinheit eingesetzt, die so aufgebaut ist, dass sich mit einer Veränderung der Fokuslage zugleich ein Einfallswinkel des Empfangslichts auf dem Bildsensor verändert. Eine Steuer- und Auswertungseinheit stellt mit Hilfe der Fokusverstelleinheit eine jeweils passende Fokuslage ein, um eine scharfe Aufnahme des Objekts aufzunehmen. Die Steuer- und Auswertungseinheit gemeinsam mit der Fokusverstelleinheit bilden insbesondere einen Autofokus. Dazu kann beispielsweise mit Hilfe eines internen oder externen Abstandssensors der Abstand zu dem Objekt vermessen und die Fokuslage entsprechend dem gemessenen Abstand eingestellt werden. Die Steuer- und Auswertungseinheit ist vorzugsweise zusätzlich mit dem Bildsensor verbunden, um Bilddaten auszulesen, vorzuverarbeiten, auszuwerten und dergleichen. Alternativ gibt es jeweils eigene Bausteine, die sich um die Fokussierung einerseits und die sonstigen Aufgaben in der Kamera wie Verarbeitung der Bilddaten andererseits kümmern.

Die Erfindung geht von dem Grundgedanken aus, die Auswirkungen der Fokusverstellung auf den Einfallswinkel des Empfangslichts dynamisch zu kompensieren. Die von den Lichtempfangselementen des Bildsensors registrierten Intensitäten weisen eine Abhängigkeit von diesem Einfallswinkel ab, es gibt eine durch den jeweiligen Einfallswinkel bedingte Empfindlichkeitsänderung, die als winkelabhängige PRNU bezeichnet werden kann. Die Steuer- und Auswertungseinheit ist dafür ausgebildet, die winkelabhängige PRNU in Abhängigkeit von dem jeweiligen Einfallswinkel zu kompensieren.

Die Erfindung hat den Vorteil, dass eine verbesserte und vorzugsweise exakte Helligkeitswiedergabe ermöglicht wird. Dadurch verbessern sich Bildqualität und im Falle einer Farbkamera auch die Farbwiedergabe. Nachgelagerte Bildverarbeitungen erzielen bessere Ergebnisse beispielsweise bei einer Merkmalsextraktion. Eine Standard-PRNU-Kompensation würde bei sich dynamisch verändernden Einfallswinkeln nicht mehr ausreichen. Das wiederum schlösse einige besonders effiziente Fokusverfahren aus, die mit einer Fokusverstellung unterschiedliche Einfallswinkel erzeugen, wie diejenigen gemäß EP 1 698 995 B1 oder EP 1 698 996 B1. Die Erfindung ermöglicht eine PRNU-Kompensation auch bei sich änderndem Einfallswinkel und erschließt damit auch solche Fokusverfahren.

Die Steuer- und Auswertungseinheit ist bevorzugt dafür ausgebildet, die Erfassung von Bilddaten durch rechnerische und/oder physische Anpassung eines Verstärkungsfaktors zu kompensieren. Der angepasste Verstärkungsfaktor wirkt der jeweiligen Intensitätsänderung aufgrund des aktuellen Einfallswinkels entgegen. Dafür kann physisch ein Verstärkerelement angesteuert und dessen Verstärkungsfaktor (Gain) angepasst werden, beispielsweise im Bildsensor oder einer nachgelagerten Ausleseschaltung. Alternativ oder zusätzlich ist eine rechnerische Anpassung des Verstärkungsfaktors in Form einer Bildauswertung denkbar, in der die ausgelesenen Bilddaten entsprechend dem Verstärkungsfaktor angepasst werden. Insbesondere werden dabei Helligkeitswerte der Bilddaten mit dem Verstärkungsfaktor reskaliert, wobei hier Helligkeitswerte sowohl Grauwerte als auch Helligkeitswerte von Farbpixeln bedeuten können.

Die Empfangsoptik weist bevorzugt ein schwenkbares optisches Element auf, insbesondere einen Umlenkspiegel, wobei ein Verschwenken des optischen Elements die Fokuslage verändert und somit den Einfallswinkel des Empfangslichts verändert. In einer solchen Ausführungsform ist das schwenkbare optische Element ein Grund oder der Grund für den sich verändernden Einfallswinkel des Empfangslichts. Dies ermöglicht eine besonders einfache und schnelle Fokusverstellung durch veränderte Lichtwege im Empfangspfad, wobei die sich verändernden Einfallswinkel in der Regel nicht das Ziel, sondern ein Nebeneffekt sind. Eine derartige Fokusverstellung wird beispielsweise in der einleitend genannten EP 1 698 995 B1 oder EP 1 698 996 B1 vorgestellt, auf die für weitere Einzelheiten verwiesen wird. Die Erfindung ermöglicht, die Vorteile einer solchen Fokusverstellung zu nutzen und zugleich eine Beeinträchtigung der Bilddaten durch die sich verändernden Einfallswinkel des Empfangslichts zu vermeiden oder zumindest zu verringern.

Die Steuer- und Auswertungseinheit weist bevorzugt einen Speicher auf, in dem eine Korrekturtabelle oder Korrekturvorschrift abgelegt ist, die einem jeweiligen Einfallswinkel des Empfangslichts eine Helligkeitsanpassung zuordnet. Dabei kann es sich um einen internen oder externen Speicher der Steuer- und Auswertungseinheit handeln. Die Korrekturtabelle (LUT, Lookup Table) ermöglicht es sehr schnell, zu einem jeweiligen Einfallswinkel die benötigte Helligkeitsanpassung aufzufinden. Alternativ zu einer Korrekturtabelle ist eine Korrekturvorschrift gespeichert, die sich als eine Funktion der Helligkeitsanpassung in Abhängigkeit vom Einfallswinkel verstehen lässt. Diese Funktion kann abstrakt durch Modellierung, Simulation und dergleichen aufgefunden sein. Besonders bevorzugt ist die Korrekturvorschrift aus einer Korrekturtabelle abgeleitet und fasst sie beispielsweise mittels Funktionsfit, insbesondere Polynomfit, kompakt zusammen, um Speicher einzusparen.

Die Steuer- und Auswertungseinheit weist bevorzugt einen Speicher auf, in dem eine Korrekturtabelle oder Korrekturvorschrift abgelegt ist, die einer jeweiligen Fokuslage eine Helligkeitsanpassung zuordnet. Es kann sich um denselben oder einen anderen Speicher handeln als denjenigen des Vorabsatzes, wobei im letzteren Fall die beiden Speicher als erster und zweiter Speicher bezeichnet werden können, sofern beide vorgesehen sind. Der sich verändernde Einfallswinkel entsteht durch eine Fokusverstellung. Daher ist es möglich, die Kompensation der winkelabhängigen PRNU direkt auf die Fokusverstellung zu beziehen. Somit wird nun direkt einer Fokuslage eine Helligkeitsanpassung zugeordnet. Der Einfallswinkel wird dabei in der Kette Fokuslage, Einfallswinkel, Helligkeitsanpassung weiterhin berücksichtigt, muss aber explizit gar nicht mehr benannt oder bekannt sein, weil dies in der Korrekturtabelle oder Korrekturvorschrift bereits einbezogen ist. Für die Ausgestaltung der Korrekturtabelle oder Korrekturvorschrift gilt der Vorabsatz sinngemäß.

Die Fokusverstelleinheit weist bevorzugt einen Antrieb auf, wobei die Steuer- und Auswertungseinheit einen Speicher aufweist, in dem eine Korrekturtabelle oder Korrekturvorschrift abgelegt ist, die einer jeweiligen Stellung des Antriebs eine Helligkeitsanpassung zuordnet. Dies kann je nach Ausführungsform nochmals derselbe, ein zweiter Speicher oder ein dritter Speicher sein. Die Wirkkette wird hier noch einmal verlängert: Der Antrieb bewirkt die Fokusverstellung, diese verändert den Einfallswinkel, dazu wird eine Helligkeitsanpassung aufgefunden. Die Korrekturtabelle oder Korrekturvorschrift setzt nun beim Antrieb an und berücksichtigt Fokuslage und Einfallswinkel implizit ein. Die Eingangswerte für den Antrieb können beispielsweise in Form von Motorstellungen, Drehstellungen oder Motorinkrementen angegeben werden. Für die Ausgestaltung der Korrekturtabelle oder Korrekturvorschrift gelten die obigen Ausführungen sinngemäß.

Die Korrekturtabelle oder Korrekturvorschrift ist bevorzugt in einem Einlernverfahren bestimmt, bei dem der Bildsensor homogen beleuchtet und die Intensitätsverteilung über die Lichtempfangselemente für verschiedene Einfallswinkel des Empfangslichts gemessen wird. Ein solches Einlernen oder Kalibrieren kann beispielsweise in der Produktion oder während der Inbetriebnahme stattfinden. Findet der Einlernvorgang erst während der Inbetriebnahme statt, wird es erfahrungsgemäß schwieriger, eine homogene Beleuchtung zu erzielen. Dann kann in einem zusätzlichen Rechenschritt der Einfluss der Inhomogenität ermittelt und kompensiert werden, aber der Aufwand ist höher als bei einem Einlernen während der Produktion unter besser kontrollierbaren Bedingungen. Es werden unter der homogenen Beleuchtung Bilder aufgenommen und die jeweiligen Helligkeiten der Lichtempfangselemente bestimmt. Schwankungen zwischen den Lichtempfangselementen sind wegen der homogenen Beleuchtung einer PRNU geschuldet. Schwankungen, die durch die Variation des Einfallswinkels auftreten, sind der winkelabhängigen PRNU zuzuordnen. Wie schon erwähnt, können herkömmliche PRNU und winkelabhängige PRNU einzeln oder gemeinsam verarbeitet werden, und die herkömmliche PRNU des Bildsensors ist möglicherweise schon ab Werk abgeglichen. Die Steuer- und Auswertungseinheit kann dafür ausgebildet sein, das Einlernverfahren in einem Einlernmodus automatisch durchzuführen, indem die Fokuslagen und damit Einfallswinkel durchgefahren und dabei Bilder aufgenommen und ausgewertet werden. Anschließend kann aus den Bildern die Korrekturtabelle oder Korrekturvorschrift gewonnen werden, letztlich ist dies für eine jeweilige Winkelstellung das jeweilige Inverse der unter homogener Beleuchtung aufgenommenen Intensitätsverteilung über das Bild. Die Kamera kann eine eigene Beleuchtung aufweisen, um während des Einlernverfahrens die homogene Beleuchtung zu erzeugen.

Die Steuer- und Auswertungseinheit ist bevorzugt dafür ausgebildet, die durch den jeweiligen Einfallswinkel des Empfangslichts bedingte Empfindlichkeitsänderung und sonstige variierende Empfindlichkeiten der Lichtempfangselemente in jeweils eigenen Schritten zu kompensieren. Die winkelabhängige PRNU ist nur ein Teil der Effekte, die eine Empfindlichkeit des Bildsensors beziehungsweise eine Empfindlichkeitsverteilung über die Lichtempfangselemente des Bildsensors hinweg beeinflussen. Nach dieser Ausführungsform werden sonstige Kompensationen, beispielsweise eine herkömmliche DSNU oder PRNU, weiterhin separat vorgenommen, die erfindungsgemäße Kompensation kommt als eigener Schritt hinzu. Alternativ umfasst die erfindungsgemäße Kompensation der winkelabhängigen PRNU mindestens einen weiteren solchen Schritt zur Kompensation von Empfindlichkeiten der Lichtempfangselemente. Dies lässt sich beispielsweise über das Vorgehen beim Einlernen von Korrekturtabellen oder Korrekturvorschriften beeinflussen, indem die sonstigen Kombinationen wie eine herkömmliche DSNU oder PRNU während des Einlernens ein- oder ausgeschaltet sind. Im ersteren Fall wird die Korrekturtabelle oder Korrekturvorschrift die sonstigen Kompensationen mit umfassen, im letzteren Fall nur separat die Kompensation der winkelabhängigen PRNU.

Die Steuer- und Auswertungseinheit ist bevorzugt dafür ausgebildet, die durch den jeweiligen Einfallswinkel des Empfangslichts bedingte Empfindlichkeitsänderung für alle Lichtempfangselemente gemeinsam, für Gruppen, insbesondere Zeilen, von Lichtempfangselementen gemeinsam oder für einzelne Lichtempfangselemente zu kompensieren. Die Kompensation der winkelabhängigen PRNU erfolgt somit individuell auf Ebene einzelner Pixel, etwas grobkörniger von Gruppen von Pixeln oder pauschal für den gesamten Bildsensor. Dementsprechend sind Einträge der Korrekturtabellen oder die Korrekturvorschriften pixelweise, gruppenweise oder nur einmalig für den ganzen Bildsensor angelegt. Eine besonders bevorzugte Gruppe erstreckt sich auf eine Zeile von Pixeln.

Zumindest einigen Lichtempfangselementen ist bevorzugt ein Farbfilter vorgeordnet. Das ermöglicht die Aufnahme von Farbbildern. Die Farbfilter erzeugen jedoch eine noch stärkere winkelabhängige PRNU, und dies insbesondere auch parasitär auf Nachbarpixeln. Sind folglich Farbfilter eingesetzt, so zeigen sich die Vorteile der erfindungsgemäßen Kompensation der winkelabhängigen PRNU in besonderer Weise.

Der Bildsensor ist bevorzugt als Mehrzeilensensor mit zwei bis vier Zeilen von Lichtempfangselementen ausgebildet, mit mindestens einer weißen Zeile, deren Lichtempfangselemente zur Aufnahme eines Grauwertbildes für weißes Licht empfindlich sind, und mindestens einer farbigen Zeile, deren Lichtempfangselemente zur Aufnahme eines Farbbildes für Licht jeweils nur einer Farbe empfindlich sind. Lichtempfangselemente der weißen Zeile nehmen somit das ganze optische Spektrum wahr und weisen beispielsweise keine Farbfilter auf. Die Grenze des empfangenen Lichts bilden natürlich die unvermeidbaren Hardwarebeschränkungen der verwendeten Lichtempfangselemente. Prinzipiell könnten in eine farbige Zeile nochmals weiße Pixel eingestreut sein, aber für solche Bildinformationen ist an sich die weiße Zeile zuständig. Mit dem Mehrzeilensensor kann ein Grauwertbild oder Schwarz-Weiß-Bild in voller Auflösung bei hohen Kontrasten und bestmöglichem Signal-Rausch-Verhältnis und zugleich eine Farbinformation gewonnen werden, die für verschiedene Zusatzauswertungen verwendet werden kann. Diese zusätzliche Farberfassung geht dank der weißen Zeile nicht zulasten der Auflösung oder des Signal-Rausch-Verhältnisses.

Der Vorteil eines Zeilensensors ist, dass mit im Vergleich zu einem Matrixsensor relativ wenigen Pixeln in einer Relativbewegung zwischen Kamera und Objekt sehr hochaufgelöste Bilder aufgenommen werden können. Der Mehrzeilensensor hat nur im Vergleich zu einem hochaufgelösten Matrixsensor wenige Pixel, es sind vorzugsweise Auflösungen von mehreren tausend oder sogar mehreren zehntausend Pixel. Durch farbige Zeilen ist eine zusätzliche Erfassung von Farbbildern auch mit einem Zeilen- beziehungsweise Mehrzeilensensor ermöglicht. Die genannten Zahlen zwei bis vier von Zeilenanordnungen sind hier genaue Angaben, keine Mindestangaben. Mit wenigen Zeilenanordnungen wird ein besonders kompakter Aufbau des Bildsensors erreicht. Die minimale Ausführungsform ist eine Doppelzeile mit einer weißen und einer farbigen Zeile. Um eine höhere Auflösung des Farbbildes in Zeilenrichtung zu erreichen, sind bevorzugt zumindest zwei farbige Zeilen vorgesehen.

Die Lichtempfangspixel innerhalb einer farbigen Zeile sind bevorzugt für dieselbe Farbe empfindlich. Mit anderen Worten ist die ganze farbige Zeile einheitlich, beispielsweise eine rote, blaue oder grüne Zeile. Damit wird die entsprechende Farbinformation in voller Auflösung erfasst. Die Lichtempfangspixel innerhalb einer farbigen Zeile können auch für unterschiedliche Farben empfindlich sein, insbesondere in alternierender Reihenfolge wie rot-blau-rot-blau. Weiterhin ist denkbar, einheitlich farbige Zeilen und gemischt farbige Zeilen miteinander zu kombinieren. Die farbigen Zeilen weisen besonders bevorzugt Lichtempfangspixel auf, die für jeweils eine von zwei Grundfarben empfindlich sind, und keine Lichtempfangspixel, die für die dritte Grundfarbe empfindlich sind. Grundfarben sind die additiven Grundfarben rot, grün und blau beziehungsweise die subtraktiven Grundfarben blaugrün (cyan), purpur (magenta) und gelb. Indem nur zwei davon vorgesehen sind, werden Lichtempfangspixel und Zeilenanordnungen eingespart. Alternativ wäre denkbar, dass alle drei jeweiligen Grundfarben vorhanden sind (RGBW, CMYW). Die Steuer- und Auswertungseinheit ist bevorzugt dafür ausgebildet, die dritte Grundfarbe mit Hilfe der weißen Zeile aus den zwei Grundfarben zu rekonstruieren. Die weiße Zeile nimmt eine Überlagerung aller Grundfarben auf, so dass die dritte Grundfarbe isoliert werden kann, wenn die beiden anderen Grundfarben aufgenommen werden. Vorzugsweise sind die aufgenommenen Grundfarben rot und blau, während grün rekonstruiert wird. Für weitere mögliche Ausgestaltungen eines farbigen Mehrzeilensensors und der Rekonstruktion einer Grundfarbe wird auf die einleitend genannte EP 3 822 844 B1 verwiesen.

In einem Mehrzeilensensor kann sich je nach Farbe und Anordnung der farbigen Pixel eine sehr unterschiedliche winkelabhängige PRNU der Zeilen ergeben. Die Informationen der mehreren Zeilen werden üblicherweise zusammengefasst, etwa in ein Schwarz-Weiß-Bild und ein Farbbild insbesondere unter Rekonstruktion einer Grundfarbe. Effektiv soll der Mehrzeilensensor somit jeweils nur eine Bildzeile aufnehmen, es geht nicht um eine zusätzliche Auflösung quer zu den Zeilen, dies wird erst sukzessive durch die wiederholte Aufnahme von Bildzeilen in Relativbewegung erreicht. Ohne die erfindungsgemäße Kompensation kann diese Zusammenfassung von Zeilen zu äußerst ungünstigen Kombinationen führen, weil die Eingangsdaten aus den unterschiedlichen Zeilen durch die winkelabhängige PRNU nicht nur verfälscht, sondern auch noch in unterschiedlichem Maße verfälscht sind, so dass ohne die Kompensation eine Farbtreue kaum erreichbar ist.

Zumindest einigen Lichtempfangselementen ist bevorzugt eine Mikrolinse vorgeordnet. Vorzugsweise ist jedem Lichtempfangselement eine Mikrolinse vorgeordnet, so dass ein Mikrolinsenarray vorgesehen ist. Es kann eine 1:1-Zuordnung geben, aber auch eine Mikrolinse für mehrere Lichtempfangselemente zuständig sein. Die Mikrolinsen sind Teil der Empfangsoptik. Sie erhöhen die winkelabhängige PRNU zum Teil erheblich.

Die Steuer- und Auswertungseinheit ist bevorzugt dafür ausgebildet, mit Hilfe der Bilddaten einen Codeinhalt eines Codes auf einem erfassten Objekt zu lesen. Die Kamera wird so zu einem kamerabasierten Codeleser für Barcodes und/oder 2D-Codes nach diversen Standards, gegebenenfalls auch für eine Texterkennung (OCR, Optical Character Reading). Bevor ein Code gelesen wird, erfolgt noch bevorzugter eine Segmentierung, mit der interessierende Bereiche (ROI, Region of Interest) als Codekandidaten identifiziert werden. Eine hohe Bildqualität nach erfindungsgemäßer Kompensation der winkelabhängigen PRNU erhöht die Chance, einen Code erfolgreich zu lesen, und somit die für Codeleser entscheidende Leserate.

Die Kamera ist bevorzugt stationär an einer Fördereinrichtung montiert, die das zu erfassende Objekt in einer Förderrichtung durch den Erfassungsbereich führt. Das ist eine häufige industrielle Anwendung einer Kamera, und die Fördereinrichtung sorgt dafür, dass sich die Objekte durch den Erfassungsbereich bewegen. Dadurch wird auch die mehrfach angesprochene sukzessive zeilenweise Erfassung in Ausführungsformen mit einem Bildsensor als Zeilensensor oder Mehrzeilensensor ermöglicht. Durch die ständig wechselnden Objektabschnitte und Objekte im Laufe der Förderbewegung muss die Fokuslage ständig angepasst werden, und damit ändert sich der Einfallswinkel des Empfangslichts, wobei dann erfindungsgemäß die jeweils entstehende winkelabhängige PRNU dynamisch kompensiert wird. Die Geschwindigkeit der Fördereinrichtung und damit der bewegten Objekte kann von einer Förderersteuerung, einem Sensor wie einem Encoder an der Fördereinrichtung oder aus einer Parametrierung der Fördereinrichtung gewonnen werden, um zu bestimmen, wann sich ein Objekt in einer Aufnahmeposition befinden wird und dergleichen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Kamera;
- Fig. 2: eine dreidimensionale Ansicht einer beispielhaften Anwendung der Kamera in Montage an einem Förderband;
- Fig. 3: eine schematische Darstellung einer Fokusverstellung für eine Kamera mit schwenkbarem optischem Element in einer ersten Fokuslage mit einem ersten Einfallswinkel des Empfangslichts auf dem Bildsensor;
- Fig. 4: eine Darstellung gemäß Figur 3 nun mit einem senkrechten Einfallswinkel des Empfangslichts auf dem Bildsensor;
- Fig. 5: eine Darstellung gemäß Figur 3 mit einem weiteren Einfallswinkel des Empfangslichts auf dem Bildsensor;
- Fig. 6: beispielhafte Intensitätsverläufe von zwei Pixeln eines Bildsensors in Abhängigkeit von dem Einfallswinkel des Empfangslichts auf dem Bildsensor; und
- Fig. 7: beispielhafte Intensitätsverläufe gemäß Figur 6 für zwei weitere Pixel eines Bildsensors.

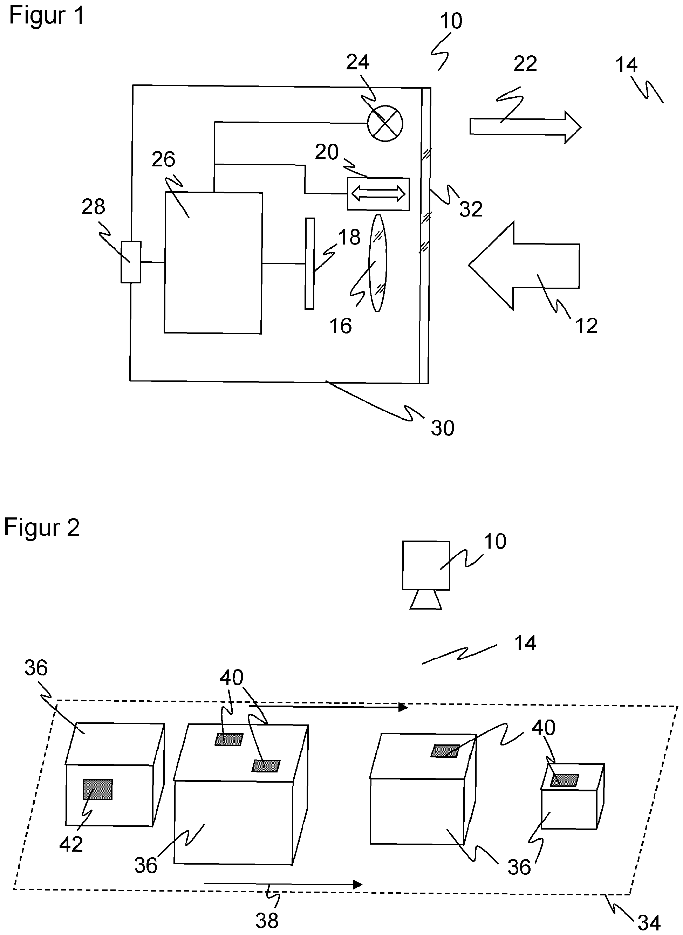

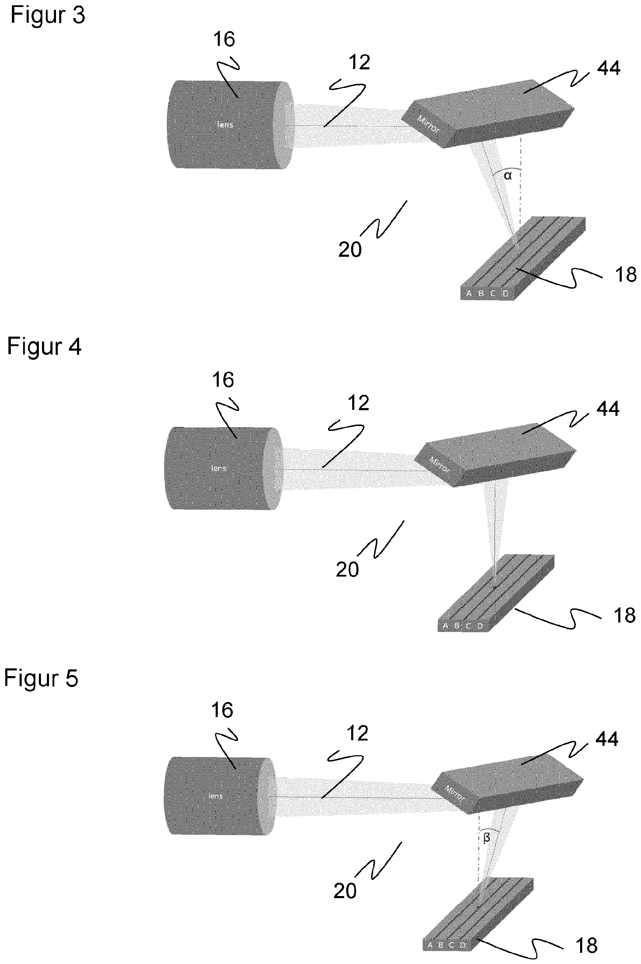

Figur 1 zeigt eine schematische Schnittdarstellung einer Kamera 10. Die Kamera ist beispielsweise ein kamerabasierter Codeleser oder eine Industriekamera (Machine Vision Camera) etwa zur Qualitätskontrolle oder automatischen Erfassung bestimmter Merkmale. Empfangslicht 12 aus einem Erfassungsbereich 14 trifft auf eine Empfangsoptik 16, die das Empfangslicht 12 auf einen Bildsensor 18 mit einer Vielzahl von insbesondere zu einer Zeile, mehreren Zeilen oder einer Matrix angeordneten Lichtempfangselementen oder Pixeln führt. Die optischen Elemente der Empfangsoptik 16 sind vorzugsweise als Objektiv aus mehreren Linsen und anderen optischen Elementen wie Blenden, Prismen und dergleichen ausgestaltet, hier aber vereinfachend nur durch eine Linse repräsentiert. Die Empfangsoptik 16 kann mittels einer Fokusverstellung 20 auf verschiedene Fokuslagen eingestellt werden, um Objekte in unterschiedlichem Abstand scharf aufzunehmen. Dafür sind verschiedenste Funktionsprinzipien vorstellbar, etwa eine Veränderung der Bildschnittweite durch einen Schrittmotor oder eine Tauchspulaktorik. Die Fokusverstellung 20 ist in Figur 1 nur rein schematisch gezeigt. Wie später noch unter Bezugnahme auf die Figuren 3 bis 5 erläutert, verändert sich mit der Fokuslage zugleich der Einfallswinkel des Empfangslichts 12 auf dem Bildsensor 18. Es kann ein nicht gezeigter optionaler interner oder externer Abstandssensor vorgesehen sein, um den Abstand zu einem aufzunehmenden Objekt zu messen und daraus eine erforderliche Fokuslage abzuleiten.

Um den Erfassungsbereich 14 während einer Aufnahme der Kamera 10 mit Sendelicht 22 auszuleuchten, umfasst die Kamera 10 eine optionale interne oder externe Beleuchtungseinheit 24, die in Figur 1 in Form einer einfachen Lichtquelle und ohne Sendeoptik dargestellt ist. In anderen Ausführungsformen sind mehrere Lichtquellen, wie LEDs oder Laserdioden, beispielsweise ringförmig um den Empfangspfad angeordnet, die auch mehrfarbig und gruppenweise oder einzeln ansteuerbar sein können, um Parameter der Beleuchtungseinheit 24 wie deren Farbe, Intensität und Richtung anzupassen.

Eine Steuer- und Auswertungseinheit 26 ist mit der Fokusverstellung 20, der Beleuchtungseinheit 24 und dem Bildsensor 18 verbunden und für die Steuerungs-, Auswertungs- und sonstigen Koordinierungsaufgaben in der Kamera 10 zuständig. Sie steuert also die Fokusverstellung 20 mit einer passenden Fokuslage insbesondere entsprechend einem gemessenen Abstandswert zu einem aufzunehmenden Objekt an und liest Bilddaten des Bildsensors 18 aus, um sie zu speichern beziehungsweise an einer Schnittstelle 28 auszugeben. Vorzugsweise ist die Steuer- und Auswertungseinheit 26 in der Lage, Codebereiche in den Bilddaten aufzufinden und zu decodieren, womit die Kamera 10 zu einem kamerabasierten Codeleser wird. Für die verschiedenen Steuer- und Auswertungsaufgaben können mehrere Bausteine vorgesehen sein, beispielsweise um die Fokusanpassungen in einem separaten Baustein oder Vorverarbeitungen der Bilddaten auf einem separaten FPGA durchzuführen. Die Kamera 10 wird durch ein Gehäuse 30 geschützt, das im vorderen Bereich, wo das Empfangslicht 12 einfällt, durch eine Frontscheibe 32 abgeschlossen ist.

Figur 2 zeigt eine mögliche Anwendung der Kamera 10 in Montage an einem Förderband 34. Das Förderband 34 fördert Objekte 36, wie durch den Pfeil 38 angedeutet, durch den Erfassungsbereich 14 der Kamera 10. Die Objekte 36 können an ihren Außenflächen Codebereiche 40 tragen. Aufgabe der Kamera 10 ist, Eigenschaften der Objekte 36 zu erfassen und in einem bevorzugten Einsatz als Codeleser die Codebereiche 40 zu erkennen, die dort angebrachten Codes auszulesen, zu dekodieren und dem jeweils zugehörigen Objekt 36 zuzuordnen. Um auch Objektseiten und insbesondere seitlich angebrachte Codebereiche 42 zu erfassen, werden vorzugsweise zusätzliche, nicht dargestellte Kameras 10 aus unterschiedlicher Perspektive eingesetzt. Außerdem können mehrere Kameras 10 nebeneinander angeordnet werden, um gemeinsam einen breiteren Erfassungsbereich 14 abzudecken.

Die Figuren 3 bis 5 illustrieren sehr schematisch eine Fokusverstellung 20, die auf einem Verschwenken eines optischen Elements 44 basiert, insbesondere eines Umlenkspiegels. Dabei ist hier beispielhaft der Bildsensor 18 ein Mehrzeilensensor aus vier Zeilenanordnungen A-D von Lichtempfangselementen oder Pixeln. Ein solcher Mehrzeilensensor kann insbesondere für die gleichzeitige Erfassung von Schwarz-Weiß- und Farbbildern eingesetzt werden, wie die in der einleitend genannten EP 3 822 844 B1 beschrieben wird.

Figur 3 zeigt eine erste Schwenkstellung des optischen Elements 44 und damit erste Fokuslage mit einem Einfallswinkel α, Figur 4 zeigt eine zweite Schwenkstellung des optischen Elements und damit zweite Fokuslage mit senkrechtem Lichteinfall, und Figur 5 zeigt eine dritte Schwenkstellung und damit dritte Fokuslage mit einem Einfallswinkel β. In weiteren Winkelstellungen des optischen Elements 44 werden weitere Fokuslagen eingenommen, und damit treten weitere Einfallswinkel des Empfangslichts 12 auf dem Bildsensor 18 auf. Eine derartige Fokusverstellung 20 wird beispielsweise in den einleitend genannten EP 1 698 995 B1 und EP 1 698 996 B1 näher erläutert, auf die ergänzend verwiesen wird. Je nach Winkelstellung des optischen Elements 44 verkürzt oder verlängert sich der Lichtweg zwischen Empfangsoptik 16 und Bildsensor 18, somit wird die Fokuslage variiert. Es ist denkbar, den Bildsensor 18 mit zu verschwenken, damit der Bildsensor 18 unter den verschiedenen Einfallswinkeln weiterhin von dem Empfangslicht 12 getroffen wird. Die dargestellte Fokusverstellung 20 ist beispielhaft zu verstehen, auch bei anderen Fokusverstellprinzipien kann sich der Einfallswinkel des Empfangslichts 12 auf dem Bildsensor 18 mit der Fokuslage ändern.

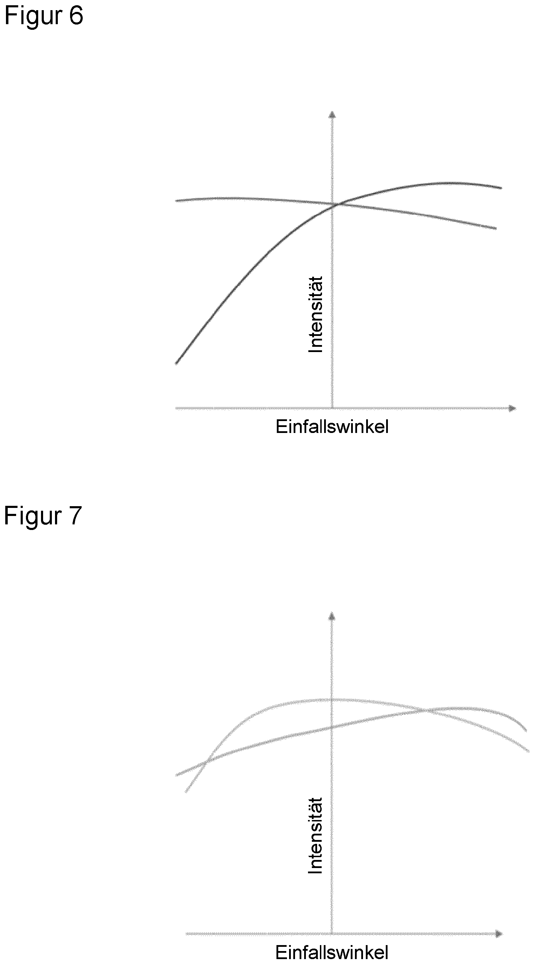

Figur 6 zeigt beispielhafte Intensitätsverläufe von zwei Lichtempfangselementen oder Pixeln des Bildsensors 18 in Abhängigkeit von dem Einfallswinkel des Empfangslichts auf dem Bildsensor 18. Die Empfindlichkeit der Lichtempfangselemente variiert mit dem Einfallswinkel, und dies teilweise individuell sehr unterschiedlich. Gründe dafür können die geometrischen Verhältnisse und die Quanteneffizienz, aber auch Mikrolinsen oder Farbfilter vor den Lichtempfangselementen sein. Der in Figur 6 illustrierte Effekt kann als winkelabhängige PRNU bezeichnet werden. In Kenntnis des aktuellen Einfallswinkels und der winkelabhängigen PRNU kann deren Effekt kompensiert werden, indem eine analoge oder digitale Verstärkung des betroffenen Lichtempfangselements reziprok angepasst wird und/oder eine entsprechende Verrechnung in den Bilddaten vorgenommen wird.

Figur 7 zeigt weitere beispielhafte Intensitätsverläufe für zwei weitere Lichtempfangselemente. Im Unterschied zu Figur 6 bestehen hier auch Unterschiede für einen senkrechten Lichteinfall bei dem der Lage der Y-Achse entsprechenden Einfallswinkel. Der winkelabhängigen PRNU können sich demnach weitere Effekte überlagern, die sich auf die Empfindlichkeit der Pixel auswirken, und diese können je nach Ausführungsform gemeinsam mit der winkelabhängigen PRNU oder separat kompensiert werden.

Die Abhängigkeiten zwischen Einfallswinkel und erforderliche Helligkeitsanpassung können als Kompensationstabelle (LUT, LookUp Table) oder Kompensationsvorschrift gespeichert sein, d.h. als funktionaler Zusammenhang oder Formel. Eine Kompensationsvorschrift kann durch Funktionsfit oder Polynom als kompakte Zusammenfassung aus einer Kompensationstabelle hervorgehen.

Zu einer Kompensationstabelle oder Kompensationsvorschrift können theoretische Überlegungen beispielsweise in Form eines Modells der Kamera 10 oder einer Simulation führen. Alternativ oder zusätzlich können Kompensationstabelle oder Kompensationsvorschrift in einem Einlern- oder Kalibrierverfahren gewonnen werden, beispielsweise während eines Produktionsabgleichs. Dabei wird der Einfallswinkel des Empfangslichts 12 unter homogener Beleuchtung des Bildsensors 18 beispielsweise in Ein-Grad-Schritten oder einer sonstigen gewünschten Feinheit variiert, und dabei werden die von den Lichtempfangselementen des Bildsensors 18 empfangenen Intensitäten gemessen. Daraus können die erforderlichen Helligkeitsanpassungen berechnet werden. Die Steuer- und Auswertungseinheit 26 kann dafür einen Einlernmodus zur Verfügung stellen, in dem diese Variationen des Einfallswinkels und die entsprechenden Messungen und Berechnungen zum Gewinnen von Korrekturtabelle oder Korrekturvorschrift automatisch vorgenommen werden.

Zwar ist es letztlich der Einfallswinkel, der die winkelabhängige PRNU verursacht. Direkteren Zugriff hat aber die Kamera 10 auf ihre Fokuslage, zu der jeweils ein Einfallswinkel gehört. Deshalb ist denkbar, in der Korrekturtabelle oder Korrekturvorschrift eine jeweilige Helligkeitsanpassung statt einem Einfallswinkel einer Fokuslage zuzuordnen. Die Verarbeitungskette kann um einen weiteren Schritt verlängert werden, indem sich die Korrekturtabelle oder Korrekturvorschrift auf eine Motoransteuerung der Fokusverstellung 20 bezieht und eine jeweilige Helligkeitsanpassung einer Motorstellung zuordnet. Denn das ist der Aktor, der angesteuert wird, um die Fokuslage zu verstellen, damit den Winkel des optischen Elements 44 und schließlich den Einfallswinkel des Empfangslichts 12 am Bildsensor 18.

Die Motorstellung kann insbesondere über Motorinkremente ausgedrückt werden, die jeweils einer Drehlage des Motors entsprechen. In einem dafür ausgestalteten Einlernverfahren werden die Motorinkremente durchgefahren und die Intensitäten der Pixel nach einer Bildaufnahme unter homogener Beleuchtung gemessen. Ein Inkrementalgeber kann im Sinne einer Regelung der Motorbewegungen prüfen, ob die jeweils angesteuerte Drehlage des Motors tatsächlich eingenommen ist. Üblicherweise kennt die Steuer- und Auswertungseinheit 26 auch eine Zuordnung zwischen Motorstellungen oder Motorinkrementen und Fokuslage, so dass die Korrekturtabelle oder Korrekturvorschrift wahlweise an die Motorstellung oder die Fokuslage geknüpft werden kann. Statt einer Drehstellung des Motors kann die Motorstellung einer linearen Bewegung zugrunde gelegt werden.

Im Betrieb wird die Korrekturtabelle oder Korrekturvorschrift herangezogen, um je nach Ausführungsform der Motorstellung, der Fokuslage oder der Winkelstellung des optischen Elements 44 beziehungsweise dem Einfallswinkel des Empfangslichts 12 auf dem Bildsensor eine Helligkeitsanpassung zuzuordnen. Dabei können Korrekturtabelle oder Korrekturvorschrift unmittelbar die kompensierenden Werte, beispielsweise für die Kompensation erforderlichen Verstärkungsfaktoren, oder zunächst nur die Intensitätsabweichungen durch die winkelabhängige PRNU enthalten, aus der dann in Echtzeit die erforderliche Kompensation bestimmt wird. Da die Kompensation möglichst in Echtzeit erfolgen sollte, ist es vorteilhaft, die entsprechende Funktionalität der Steuer- und Auswertungseinheit 26 auf einem FPGA (Field Programmable Gate Array) oder in einem ASIC (Application-Specific Integrated Circuit) zu implementieren. Ein eigentlicher Abgleich findet im Betrieb vorzugsweise nicht mehr statt, die Kompensation basiert dann vielmehr vollständig auf den zuvor eingelernten Zusammenhängen. Die Kompensation kann als Steuerung erfolgen, nicht als Regelung, da die hier relevante Störgröße bekannt ist, nämlich die jeweilige Fokuslage.

Die Kompensation der winkelabhängigen PRNU kann unterschiedlich feinkörnig erfolgen. Es ist eine individuelle Kompensation auf Ebene einzelner Lichtempfangselemente des Bildsensors 18 möglich. Alternativ erfolgt nur eine pauschale, einmalige Anpassung für den ganzen Bildsensor 18. Als Zwischenlösung werden Pixel für die Kompensation gruppenweise zusammengefasst und innerhalb der Gruppe gleichartig kompensiert, beispielsweise anhand eines für diese Gruppe bestimmten Mittelwerts. Ein besonders bevorzugter Sonderfall solcher Gruppen ist eine Zusammenfassung in Zeilen, insbesondere für einen Mehrzeilensensor wie in den Figuren 3 bis 5 beispielhaft gezeigt. Damit eine Gruppenzusammenfassung sinnvoll ist, sollte sich die winkelabhängige PRNU innerhalb einer Gruppe nicht allzu stark unterscheiden. Bei weißen oder farbigen Zeilen eines Mehrzeilensensors ist das der Fall.

In einer bevorzugten Ausführungsform ist der Bildsensor 18 farbempfindlich. Dazu sind dessen Lichtempfangselementen zumindest teilweise Farbfilter vorgeordnet, etwa in einem Bayer-Pattern, für eine farbige Zeile eines Mehrzeilensensors mit einem über die Zeile einheitlichen Farbfilter oder einer beispielsweise alternierenden Abfolge von Farben. Dazwischen kann es monochrome Lichtempfangselemente oder mindestens eine ganze monochrome Zeile geben. Die winkelabhängige PRNU variiert im Falle solcher Farbfilter besonders stark und je nach Farbe unterschiedlich, wobei auch parasitäre Effekte an Lichtempfangselementen ohne eigene Farbfilter, jedoch in der Nachbarschaft von Lichtempfangselementen mit Farbfilter auftreten können. Bei einem Mehrzeilensensor werden die Informationen der mehreren Zeilen vorzugsweise zusammengefasst, um insbesondere jeweils eine einzige schwarz-weiße Bildzeile beziehungsweise aus den Grundfarben aggregierte farbige Bildzeile zu gewinnen. In einer solchen Kombination kumuliert sich der jeweilige Einfluss der winkelabhängigen PRNU, und daher ist die erfindungsgemäße Kompensation besonders vorteilhaft, weil sich sonst ein besonders ausgeprägter Gesamtfehler ergeben würde. Verstärkende Effekte der PRNU können auch durch andere dem Bildsensor 18 vorgeordnete Elemente entstehen, beispielsweise Mikrolinsen, die als Teil der Empfangsoptik 16 mit deren fokusverstellbaren optischen Elementen zusammenwirken.

## Patentansprüche

1. Kamera (10) zur Erfassung eines Objekts (36) in einem Erfassungsbereich (14), die einen Bildsensor (18) mit einer Vielzahl von Lichtempfangselementen zur Erzeugung von Bilddaten aus Empfangslicht (12) aus dem Erfassungsbereich (14), eine Empfangsoptik (16) mit einer Fokusverstelleinheit (20) zur Einstellung einer Fokuslage, wobei mit einer Veränderung der Fokuslage ein Einfallswinkel des Empfangslichts (12) auf dem Bildsensor (18) verändert, sowie eine Steuer- und Auswertungseinheit (26) aufweist, die dafür ausgebildet ist, die Fokuslage für eine scharfe Aufnahme von Bilddaten des Objekts (36) einzustellen,
**dadurch gekennzeichnet,**
**dass** die Steuer- und Auswertungseinheit (26) weiterhin dafür ausgebildet ist, eine durch den jeweiligen Einfallswinkel des Empfangslichts (12) bedingte Empfindlichkeitsänderung der Erfassung von Bilddaten und somit Auswirkungen der Fokusverstellung auf den Einfallswinkel des Empfangslichts dynamisch zu kompensieren.

2. Kamera (10) nach Anspruch 1,
wobei die Steuer- und Auswertungseinheit (26) dafür ausgebildet ist, die Erfassung von Bilddaten durch rechnerische und/oder physische Anpassung eines Verstärkungsfaktors zu kompensieren.

3. Kamera (10) nach Anspruch 1 oder 2,
wobei die Empfangsoptik (16) ein schwenkbares optisches Element (44) aufweist, insbesondere einen Umlenkspiegel, und wobei ein Verschwenken des optischen Elements (44) die Fokuslage verändert und somit den Einfallswinkel des Empfangslichts (12) verändert.

4. Kamera (10) nach einem der vorhergehenden Ansprüche,
wobei die Steuer- und Auswertungseinheit (26) einen Speicher aufweist, in dem eine Korrekturtabelle oder Korrekturvorschrift abgelegt ist, die einem jeweiligen Einfallswinkel des Empfangslichts (12) eine Helligkeitsanpassung zuordnet.

5. Kamera (10) nach einem der vorhergehenden Ansprüche,
wobei die Steuer- und Auswertungseinheit (26) einen Speicher aufweist, in dem eine Korrekturtabelle oder Korrekturvorschrift abgelegt ist, die einer jeweiligen Fokuslage eine Helligkeitsanpassung zuordnet.

6. Kamera (10) nach einem der vorhergehenden Ansprüche,
wobei die Fokusverstelleinheit (20) einen Antrieb aufweist, und wobei die Steuer- und Auswertungseinheit (26) einen Speicher aufweist, in dem eine Korrekturtabelle oder Korrekturvorschrift abgelegt ist, die einer jeweiligen Stellung des Antriebs eine Helligkeitsanpassung zuordnet.

7. Kamera (10) nach einem der vorhergehenden Ansprüche,
wobei die Korrekturtabelle oder Korrekturvorschrift in einem Einlernverfahren bestimmt ist, bei dem der Bildsensor (18) homogen beleuchtet und die Intensitätsverteilung über die Lichtempfangselemente für verschiedene Einfallswinkel des Empfangslichts (12) gemessen wird.

8. Kamera (10) nach einem der vorhergehenden Ansprüche,
wobei die Steuer- und Auswertungseinheit (26) dafür ausgebildet ist, die durch den jeweiligen Einfallswinkel des Empfangslichts (12) bedingte Empfindlichkeitsänderung und sonstige variierende Empfindlichkeiten der Lichtempfangselemente in jeweils eigenen Schritten zu kompensieren.

9. Kamera (10) nach einem der vorhergehenden Ansprüche,
wobei die Steuer- und Auswertungseinheit (26) dafür ausgebildet ist, die durch den jeweiligen Einfallswinkel des Empfangslichts (12) bedingte Empfindlichkeitsänderung für alle Lichtempfangselemente gemeinsam, für Gruppen, insbesondere Zeilen, von Lichtempfangselementen gemeinsam oder für einzelne Lichtempfangselemente zu kompensieren.

10. Kamera (10) nach einem der vorhergehenden Ansprüche,
wobei zumindest einigen Lichtempfangselementen ein Farbfilter vorgeordnet ist.

11. Kamera (10) nach einem der vorhergehenden Ansprüche,
wobei der Bildsensor (18) als Mehrzeilensensor mit zwei bis vier Zeilen von Lichtempfangselementen ausgebildet ist, mit mindestens einer weißen Zeile, deren Lichtempfangselemente zur Aufnahme eines Grauwertbildes für weißes Licht empfindlich sind, und mindestens einer farbigen Zeile, deren Lichtempfangselemente zur Aufnahme eines Farbbildes für Licht jeweils nur einer Farbe empfindlich sind.

12. Kamera (10) nach einem der vorhergehenden Ansprüche,
wobei zumindest einigen Lichtempfangselementen eine Mikrolinse vorgeordnet ist.

13. Kamera (10) nach einem der vorhergehenden Ansprüche,
wobei die Steuer- und Auswertungseinheit (26) dafür ausgebildet ist, mit Hilfe der Bilddaten einen Codeinhalt eines Codes (40) auf einem erfassten Objekt (36) zu lesen.

14. Kamera (10) nach einem der vorhergehenden Ansprüche,
die stationär an einer Fördereinrichtung (34) montiert ist, die das zu erfassende Objekt (36) in einer Förderrichtung (38) durch den Erfassungsbereich (14) führt.

15. Verfahren zur Erfassung eines Objekts (36) in einem Erfassungsbereich (14), bei dem ein Bildsensor (18) mit einer Vielzahl von Lichtempfangselementen aus Empfangslicht (12) aus dem Erfassungsbereich (14) Bilddaten erzeugt, wobei eine Fokusverstelleinheit (20) die Fokuslage einer Empfangsoptik (16) für eine scharfe Aufnahme von Bilddaten des Objekts (36) einstellt und mit einer Veränderung der Fokuslage eine Veränderung des Einfallswinkels des Empfangslichts (12) auf dem Bildsensor (18) einhergeht,
**dadurch gekennzeichnet,**
**dass** eine durch den jeweiligen Einfallswinkel des Empfangslichts (12) bedingte Empfindlichkeitsänderung der Erfassung von Bilddaten kompensiert wird, somit Auswirkungen der Fokusverstellung auf den Einfallswinkel des Empfangslichts dynamisch kompensiert werden.

## Claims

1. A camera (10) for detecting an object (36) in a detection area (14), comprising an image sensor (18) having a plurality of light-receiving elements for generating image data from received light (12) from the detection area (14), receiving optics (16) having a focus adjustment unit (20) for setting a focus position, a change in the focus position changing an angle of incidence of the received light (12) on the image sensor (18), and a control and evaluation unit (26) configured to set the focus position for a sharp recording of image data of the object (36),
**characterized in that** the control and evaluation unit (26) is further configured to dynamically compensate for a change in sensitivity of the acquisition of image data caused by the respective angle of incidence of the received light (12) and thus for effects of the focus adjustment on the angle of incidence of the received light.

2. The camera (10) according to claim 1,
wherein the control and evaluation unit (26) is configured to compensate the acquisition of image data by computationally and/or physically adjusting a gain factor.

3. The camera (10) according to claim 1 or 2,
wherein the receiving optics (16) has a pivotable optical element (44), in particular a deflecting mirror, and wherein pivoting the optical element (44) changes the focus position and thus changes the angle of incidence of the received light (12).

4. The camera (10) according to any of the preceding claims,
wherein the control and evaluation unit (26) comprises a memory in which a correction table or correction rule is stored that assigns a brightness adjustment to a respective angle of incidence of the received light (12).

5. The camera (10) according to any of the preceding claims,
wherein the control and evaluation unit (26) comprises a memory in which a correction table or correction rule is stored that assigns a brightness adjustment to a respective focus position.

6. The camera (10) according to any of the preceding claims,
wherein the focus adjustment unit (20) comprises a drive, and wherein the control and evaluation unit (26) comprises a memory in which a correction table or correction rule is stored that assigns a brightness adjustment to a respective position of the drive.

7. The camera (10) according to any of the preceding claims,
wherein the correction table or correction rule is determined in a teach-in procedure in which the image sensor (18) is homogeneously illuminated and the intensity distribution over the light-receiving elements is measured for different angles of incidence of the received light (12).

8. The camera (10) according to any of the preceding claims,
wherein the control and evaluation unit (26) is configured to compensate the change in sensitivity caused by the respective angle of incidence of the received light (12) and other varying sensitivities of the light-receiving elements in respective separate steps.

9. The camera (10) according to any of the preceding claims,
wherein the control and evaluation unit (26) is configured to compensate for the change in sensitivity caused by the respective angle of incidence of the received light (12) for all light-receiving elements together, for groups, in particular lines, of light-receiving elements together or for individual light-receiving elements.

10. The camera (10) according to any of the preceding claims,
wherein at least some light receiving elements are preceded by a color filter.

11. The camera (10) according to any of the preceding claims,
wherein the image sensor (18) is configured as a multi-line sensor having two to four lines of light-receiving elements, with at least one white line, the light-receiving elements of which are sensitive to white light for recording a grayscale image, and at least one colored line, the light-receiving elements of which are sensitive to light of only one color for recording a color image.

12. The camera (10) according to any of the preceding claims,
wherein at least some light-receiving elements are preceded by a microlens.

13. The camera (10) according to any of the preceding claims,
wherein the control and evaluation unit (26) is configured to read a code content of a code (40) on a captured object (36) with the aid of the image data.

14. The camera (10) according to any of the preceding claims,
which is stationarily mounted on a conveyor device (34) that guides the object (36) to be detected in a conveying direction (38) through the detection area (14).

15. A method for detecting an object (36) in a detection area (14), wherein an image sensor (18) having a plurality of light-receiving elements generates image data from received light (12) from the detection area (14), wherein a focus adjustment unit (20) adjusts the focus position of receiving optics (16) for a sharp recording of image data of the object (36) and a change in the focus position is accompanied by a change in the angle of incidence of the received light (12) on the image sensor (18),
**characterized in that** a change in the sensitivity of the acquisition of image data caused by the respective angle of incidence of the received light (12) is compensated, thus dynamically compensating for the effects of the focus adjustment on the angle of incidence of the received light.

## Revendications

1. Caméra (10) pour la détection d'un objet (36) dans une zone de détection (14), comprenant un capteur d'image (18) avec une pluralité d'éléments de réception de lumière pour générer des données d'image à partir de la lumière de réception (12) de la zone de détection (14), une optique de réception (16) avec une unité de réglage focale (20) pour régler une position focale, une modification de la position focale modifiant un angle d'incidence de la lumière de réception (12) sur le capteur d'image (18), ainsi qu'une unité de commande et d'évaluation (26) configurée pour régler la position focale pour un enregistrement net des données d'image de l'objet (36),
**caractérisée en ce que**
l'unité de commande et d'évaluation (26) est en outre configurée pour compenser de manière dynamique une modification de sensibilité de la détection des données d'image causée par l'angle d'incidence respectif de la lumière de réception (12) et donc les effets du réglage focale sur l'angle d'incidence de la lumière de réception.

2. Caméra (10) selon la revendication 1,
dans laquelle l'unité de commande et d'évaluation (26) est configurée pour compenser la détection de données d'image par l'adaptation par calcul et/ou physique d'un facteur de gain.

3. Caméra (10) selon la revendication 1 ou 2,
dans laquelle l'optique de réception (16) comprend un élément optique pivotant (44), en particulier un miroir de renvoi, et dans laquelle un pivotement de l'élément optique (44) modifie la position focale et donc l'angle d'incidence de la lumière de réception (12).

4. Caméra (10) selon l'une des revendications précédentes,
dans laquelle l'unité de commande et d'évaluation (26) comprend une mémoire dans laquelle est stockée un tableau de correction ou une règle de correction qui attribue une adaptation de luminosité à un angle d'incidence respectif de la lumière de réception (12).

5. Caméra (10) selon l'une des revendications précédentes,
dans laquelle l'unité de commande et d'évaluation (26) comprend une mémoire dans laquelle est stockée un tableau de correction ou une règle de correction qui attribue une adaptation de luminosité à une position focale respective.

6. Caméra (10) selon l'une des revendications précédentes,
dans laquelle l'unité de réglage focale (20) comprend un entraînement, et dans laquelle l'unité de commande et d'évaluation (26) comprend une mémoire dans laquelle est stockée un tableau de correction ou une règle de correction qui attribue une adaptation de la luminosité à une position respective de l'entraînement.

7. Caméra (10) selon l'une des revendications précédentes,
dans laquelle le tableau de correction ou la règle de correction est déterminée dans un procédé d'apprentissage dans lequel le capteur d'image (18) est éclairé de manière homogène et la distribution de l'intensité sur les éléments de réception de la lumière est mesurée pour différents angles d'incidence de la lumière de réception (12).

8. Caméra (10) selon l'une des revendications précédentes,
dans laquelle l'unité de commande et d'évaluation (26) est configurée pour compenser la modification de sensibilité causé par l'angle d'incidence respectif de la lumière de réception (12) et d'autres sensibilités variables des éléments de réception de la lumière dans des étapes propres respectives.

9. Caméra (10) selon l'une des revendications précédentes,
dans laquelle l'unité de commande et d'évaluation (26) est configurée pour compenser la modification de sensibilité causé par l'angle d'incidence respectif de la lumière de réception (12) pour tous les éléments de réception de la lumière ensemble, pour des groupes, en particulier des lignes, d'éléments de réception de la lumière ensemble ou pour des éléments de réception de la lumière individuels.

10. Caméra (10) selon l'une des revendications précédentes,
dans laquelle au moins certains éléments de réception de la lumière sont précédés d'un filtre de couleur.

11. Caméra (10) selon l'une des revendications précédentes,
dans laquelle le capteur d'image (18) est configuré comme un capteur multi-lignes avec deux à quatre lignes d'éléments de réception de la lumière, avec au moins une ligne blanche, dont les éléments de réception de la lumière sont sensibles à la lumière blanche pour enregistrer une image en niveaux de gris, et au moins une ligne colorée, dont les éléments de réception de la lumière sont sensibles à la lumière d'une seule couleur respective pour enregistrer une image en couleurs.

12. Caméra (10) selon l'une des revendications précédentes,
dans laquelle au moins certains éléments de réception de la lumière sont précédés d'une microlentille.

13. Caméra (10) selon l'une des revendications précédentes,
dans laquelle l'unité de commande et d'évaluation (26) est configurée pour lire le contenu de code d'un code (40) sur un objet détecté (36) à l'aide des données d'image.

14. Caméra (10) selon l'une des revendications précédentes,
qui est montée de manière fixe sur un dispositif de transport (34) qui guide l'objet (36) à détecter dans une direction de transport (38) à travers la zone de détection (14).

15. Procédé de détection d'un objet (36) dans une zone de détection (14), dans lequel un capteur d'image (18) avec une pluralité d'éléments de réception de la lumière génère des données d'image à partir de la lumière de réception (12) de la zone de détection (14), dans lequel une unité de réglage focale (20) règle la position focale d'une optique de réception (16) pour un enregistrement net des données d'image de l'objet (36) et une modification de la position focale est accompagnée d'une modification de l'angle d'incidence de la lumière de réception (12) sur le capteur d'image (18),
**caractérisé en ce**
**qu'**une modification de sensibilité de la détection des données d'image causée par l'angle d'incidence respectif de la lumière de réception (12) est compensée, de sorte que les effets du réglage focale sur l'angle d'incidence de la lumière de réception sont compensés de manière dynamique.
